# EUROPÄISCHE PATENTSCHRIFT

(11) **EP 3 558 081 B1**
(45) Veröffentlichungstag und Bekanntmachung des Hinweises auf die Patenterteilung: **07.02.2024**
(21) Anmeldenummer: 17811938.4
(22) Anmeldetag: 07.12.2017
(51) Int. Cl.: A47L 15/00, D06F 39/02, C11D 17/04, A47L 15/44, D06F 33/37

(54) **VERFAHREN ZUR DOSIERUNG VON REINIGUNGSMITTELN**
METHOD FOR METERING CLEANING AGENTS
PROCÉDÉ DE DOSAGE DE PRODUITS DE LAVAGE

(30) Priorität: 21.12.2016 DE 102016225828
(43) Veröffentlichungstag der Anmeldung: 30.10.2019
(73) Patentinhaber: Henkel AG & Co. KGaA, 40589 Düsseldorf (DE)
(72) Erfinder: KESSLER, Arnd, 40789 Monheim am Rhein (DE); WEBER, Thomas, 41541 Dormagen (DE); ZIPFEL, Johannes, 40593 Düsseldorf (DE); NITSCH, Christian, 40591 Düsseldorf (DE); ZÜCHNER, Lars, 40764 Langenfeld (DE); FRANKE, Nadine, 50668 Köln (DE); WAWER, Georg, 1040 Wien (AT); MÜLLER, Alexander, 40789 Monheim (DE); JUCKEL, Thomas, 40789 Monheim (DE); ARTH, Clemens, 8020 Graz (AT)
(86) Internationale Anmeldenummer: PCT/EP2017/081855
(87) Internationale Veröffentlichungsnummer: WO 2018/114362

(56) Entgegenhaltungen:
- EP-A2- 2 277 429
- WO-A1-02/077353
- DE-A1-102006 038 341
- DE-A1-102008 036 586
- US-A1- 2014 236 328

## Beschreibung

### Gebiet der Erfindung

Die Erfindung betrifft ein Verfahren und eine Vorrichtung zur automatischen Dosierung von Reinigungsmitteln in einer Reinigungsmaschine.

### Hintergrund der Erfindung

Ein bekanntes Problem bei der Reinigung mit Hilfe von Reinigungsmaschinen betrifft die Dosierung der verwendeten Reinigungsmittel, insbesondere im Hinblick auf den optimalen Zeitpunkt der Abgabe der Reinigungssubstanz und die optimale Menge. Hierbei führt sowohl eine zu niedrige, als auch eine zu hohe Dosierung von Reinigungsmitteln zu einem unbefriedigenden Reinigungsergebnis. Im Falle einer zu hohen Dosierung werden darüber hinaus unnötig viel Energie, Reinigungsmittel und Wasser verbraucht, wodurch sich nicht nur die Kosten erhöhen, sondern auch die Umwelt zusätzlich belastet wird.

Eine exakte Dosierung des Reinigungsmittels ist jedoch nicht trivial, da die richtige Dosierung nicht nur von der Menge und dem Verschmutzungsgrad der zu reinigenden Gegenstände, sondern auch von anderen Faktoren, wie dem ausgewählten Reinigungsprogramm, der Verschmutzungsart, der Wasserhärte, dem Reinigungsmittel sowie eventuellen Reinigungszusätzen und dergleichen abhängt.

Zur Lösung der genannten Probleme sind Reinigungsmaschinen mit automatischen Dosiersystemen bekannt, bei denen mit Hilfe von verschiedenen Sensoren ein aktueller Reinigungszustand von Reinigungsgut sowie ein aktueller Betriebszustand einer Reinigungsmaschine identifiziert werden und in Abhängigkeit der ermittelten Zustände, Reinigungsmittel dosiert an die Reinigungsmaschinen abgegeben wird, so dass ein einziger Reinigungsvorgang vorzugsweise eine Vielzahl von Dosiervorgängen umfasst.

Weil eine automatische Dosierung jedoch auch bei Reinigungsvorgängen mit älteren Reinigungsmaschinen erwünscht ist, die in der Regel eine Haltbarkeit von 15 - 20 Jahren aufweisen, wurde ein universell einsetzbares nachrüstbares System, insbesondere ein universell einsetzbares mobiles automatisches Dosiergerät vorgeschlagen, bei dem ebenfalls in Abhängigkeit ermittelter aktueller Reinigungszustände des Reinigungsguts sowie in Abhängigkeit ermittelter aktueller Betriebszustände der Reinigungsmaschinen, Reinigungsmittel dosiert an die Reinigungsmaschinen abgegeben wird.

Nachteilig an dem vorgeschlagenen mobilen automatischen Dosiergerät ist jedoch, dass dieses insbesondere bei der Gewährleistung der erwünschten universellen Einsetzbarkeit einen optimalen Zeitpunkt zur Dosierung von Reinigungsmittel während eines Reinigungsvorgangs - ausschließlich anhand von während eines Reinigungsvorgangs ermittelten Daten - nur ungenau bestimmen kann, was dazu führt, dass schließlich auch kein optimales Reinigungsergebnis erzielt werden kann. Insbesondere die exakte Bestimmung der aktuellen Betriebszustände einer Reinigungsmaschine ausschließlich anhand von während eines Reinigungsvorgangs ermittelten Daten ist hierbei problematisch.

Dokument DE102008036586 A1 beschreibt eine Dosiervorrichtung für Haushaltsgeräte, die spezielle Funktionalitäten aufweist, welche eine bessere Dosierung von Reinigungsmitteln ermöglichen.

Allgemeine Beschreibung einiger beispielhafter Ausführungsformen der Erfindung Vor diesem Hintergrund ist es somit Aufgabe, die beschriebenen Probleme zumindest teilweise zu verringern oder zu vermeiden, das heißt ein optimales Reinigungsergebnis unter geringem Energie-, Wasser-und Reinigungsmittelverbrauch bei einer möglichst universellen Einsetzbarkeit des mobilen Dosiergeräts zu liefern.

Diese Aufgabe wird gegenständlich durch ein Verfahren zur automatischen Dosierung von

Reinigungsmitteln gemäß Anspruch 1 sowie durch ein System nach Anspruch 10 gelöst.

Es ist erkannt worden, dass ein optimaler Zeitpunkt zur Dosierung von Reinigungsmittel während eines Reinigungsvorgangs besonders exakt bestimmt werden kann, indem neben einem aktuellen Reinigungszustand des Reinigungsguts auch ein aktueller Betriebszustand einer Reinigungsmaschine bekannt ist.

Ferner ist erkannt worden, dass der Betriebszustand einer Reinigungsmaschine und damit bei Kenntnis eines aktuellen Reinigungszustands auch der optimale Zeitpunkt für eine Dosierung von Reinigungsmittel besonders exakt bestimmt werden kann, indem das Dosiergerät vor Beginn eines Reinigungsvorgangs Steuerinformationen betreffend die den Reinigungsvorgang durchführende Reinigungsmaschine erhält.

Gemäß einem ersten Aspekt wird daher ein Verfahren zur Dosierung von Reinigungsmitteln in Reinigungsmaschinen vorgeschlagen, umfassend die Schritte: Empfangen von Steuerinformationen,
wobei die Steuerinformationen abhängig von einer Information zu einer Reinigungsmaschine sind; Ermitteln des Fortschritts eines Reinigungsvorgangs; Dosieren von Reinigungsmittel abhängig von den empfangenen Steuerinformationen und dem ermittelten Fortschritt des Reinigungsvorgangs;
wobei die Information zu der Reinigungsmaschine über eine Nutzerschnittstelle manuell eingebbar ist; und wobei die Information zu einer Reinigungsmaschine eine gerätespezifische Information ist, vorzugsweise eine die Reinigungsmaschine eindeutig definierende Information, ausgewählt aus einer Seriennummer, einer Produktnummer, einer Typnummer, einer Modellnummer, einer Servicenummer, einer Gestellnummer, einer Marke, einer Baureihe, einem Bautyp der Reinigungsmaschine.

Unter Reinigungsmitteln werden gegenständlich nicht nur Waschmittel, sondern insbesondere auch Weichspüler, Maschinenreiniger, Geschirrspülmittel, Wasserenthärter, Klarspüler, Stärke, Essigreiniger, Wasserabweiser, Farbfänger, Bleichmittel, Vergrauungsinhibitoren, Farbübertragungsinhibitoren sowie biologisch aktive Systeme und dergleichen verstanden.

Unter Reinigungsmaschinen können gegenständlich insbesondere Haushaltsmaschinen, wie Waschmaschinen, Spülmaschinen, Wäschetrockner, Wäschemangeln und dergleichen verstanden werden, es können aber auch Großküchengeräte bzw. Geräte aus Textilreinigungsbetrieben unter Reinigungsmaschinen verstanden werden.

Bei den gemäß dem gegenständlichen Verfahren zur Dosierung von Reinigungsmitteln in Reinigungsmaschinen vorzugsweise an ein mobiles Dosiergerät übertragenen Steuerinformationen handelt es sich vorteilhafterweise um Steuerinformationen betreffend die Programmstruktur der den Reinigungsvorgang ausführenden Reinigungsmaschine, welche von dem Dosiergerät dazu genutzt werden können, einen Betriebszustand eines Reinigungsvorgangs in einer Reinigungsmaschine exakter bestimmen zu können, wodurch ein Zeitpunkt zur Dosierung von Reinigungsmittel auch exakter ermittelt werden kann, so dass ein möglichst optimales Reinigungsergebnis erzielt werden kann.

Vorteilhaftersweise umfassen die Steuerinformationen den vollständigen Programmablauf einer Reinigungsmaschine in allen mit der Reinigungsmaschine durchführbaren Reinigungsprogrammen. Als Programmablauf wird dabei die Abfolge sämtlicher während eines Programms ausführbarer Operationen verstanden, die in der Regel für jeden Reinigungsmaschinentypen individuell sind.

Ein mobiles Dosiergerät zur Ausführung des gegenständlichen Verfahrens verfügt dabei über eine Kommunikationseinheit umfassend eine Kommunikationsschnittstelle eingerichtet zum Empfang der Steuerinformation. Für einen flexiblen vorzugsweise auch aus der Ferne möglichen Empfang der Steuerinformation ist die Kommunikationsschnittstelle dabei vorteilhafterweise als Drahtloskommunikationsschnittstelle gebildet.

Die von dem Dosiergerät über die Kommunikationseinheit empfangenen Steuerinformationen sind auf einem Speicher, insbesondere auf einem entfernt von dem Dosiergerät angeordneten externen Speicher hinterlegt. Vorzugsweise ist der externe Speicher Cloud-basiert und über eine Verbindung zur Cloud erreichbar. Vorteilhafterweise kann das Dosiergerät die Steuerinformationen auf diese Weise direkt von dem externen Speicher erhalten. Dies ermöglicht einen Cloud-basierten Umgang mit den gespeicherten Daten und somit neben einem einfachen Austausch von Informationen auch einen praktisch universellen Zugriff auf die Informationen.

Neben einem Empfang der auf einem externen Speicher gespeicherten Steuerinformationen über eine direkte Verbindung zu dem Speicher, können die Steuerinformationen auch indirekt, beispielsweise über einen Internetdienst übertragen und von dem Dosiergerät empfangen werden. Alternativ kann der Speicher auch als interner Speicher gebildet und an dem Dosiergerät angeordnet sein, vorzugsweise in das Dosiergerät integriert sein. Dies ermöglicht dann zwar keinen Cloud-basierten Zugang zu den Daten, erfordert aber auch keine als Drahtlosschnittstelle gebildete Kommunikationsschnittstelle.

Gemäß einer weiteren Ausführungsform des gegenständlichen Verfahrens zur Dosierung von Reinigungsmitteln in Reinigungsmaschinen wird vorgeschlagen, dass die Steuerinformationen anstatt direkt von dem Speicher, über einen Nutzer, beispielsweise mit Hilfe eines Nutzerendgeräts wie einem Smart Phone, einem Tablet oder einem Computer drahtlos an das mobile Dosiergerät übertragen und von dem Dosiergerät empfangen werden.

Das Nutzerendgerät kann hierbei vorzugsweise über eine Applikation eine Verbindung zu dem Dosiergerät aufbauen und die Steuerinformationen drahtlos beispielsweise per WLAN, Bluetooth oder Mobilfunk an das Dosiergerät senden.

Das Nutzerendgerät kann zudem ebenfalls drahtlos mit dem Speicher verbunden sein, um die anschließend an das Dosiergerät weitergeleiteten Steuerinformationen von dem Speicher zu erhalten bzw. von dem Speicher abzurufen.

Da die empfangenen Steuerinformationen gemäß dem gegenständlichen Verfahren abhängig von einer Information zu einer Reinigungsmaschine sind, muss der Speicher vor der Auswahl der entsprechenden Steuerinformationen zunächst eine entsprechende Information zu einer Reinigungsmaschine erhalten. Diese Information erhält der Speicher vorzugsweise von dem Nutzer selbst, insbesondere über eine drahtlose Verbindung über eine Nutzerendgerät.

Gemäß einer weiteren möglichen Ausführungsform kann es sich bei der Information zu einer Reinigungsmaschine auch um eine aus einem oder mehreren gerätespezifischen Kennzeichen zusammengesetzte Information handeln, welche die Reinigungsmaschine schließlich eindeutig identifiziert. Als gerätespezifische Kennzeichen können dabei unter anderem beispielsweise die Art und/oder das Baujahr und/oder das Fassungsvermögen und/oder die Ladekapazität und/oder die Energieklassifizierung und/oder die Befüllweise der Reinigungsmaschine verwendet werden.

Die Information zu einer Reinigungsmaschine bzw. eine aus mehreren gerätespezifischen Kennzeichen zusammengesetzte Information wird gemäß dem gegenständlichen Verfahren über eine Nutzerschnittstelle manuell eingegeben.

Hierbei kann ein Nutzer die Information zu einer Reinigungsmaschine gemäß einer vorteilhaften Ausführungsform des gegenständlichen Verfahrens aus einer dem Nutzer zur Verfügung gestellten Liste von Reinigungsmaschinen auswählen. Vorzugsweise ist die Liste dabei als Tabelle gebildet, welche Reinigungsmaschinen anhand verschiedener Kriterien auflistet und dem Nutzer ermöglicht, seine Reinigungsmaschine über eine die entsprechende Maschine eindeutig definierende gerätespezifische Information bzw. über eine aus mehreren gerätespezifischen Kennzeichen zusammengesetzte Information auszuwählen.

Vorteilhafterweise ist die betreffende Information zu einer Reinigungsmaschine dabei gemeinsam mit den jeweiligen Steuerinformationen auf dem Speicher hinterlegt, so dass der Nutzer über eine Verbindung zu dem Speicher Zugang zu den Steuerinformationen erhält.

Eine Verbindung eines Nutzers zu dem Speicher kann dabei vorzugsweise über eine Applikation eines Nutzerendgeräts hergestellt werden.

Alternativ kann der Nutzer zur Ermittlung der Steuerinformationen zumindest eine Zieladresse des Speichers erhalten, beispielsweise von dem mobilen Dosiergerät. Das mobile Dosiergerät kann beispielsweise bei Unterschreitung einer bestimmten Entfernung zu dem Nutzerendgerät die Anwesenheit eines Nutzers erkennen und dem Nutzer nach einem Verbindungsaufbau eine Zieladresse eines Speichers zukommen lassen, über die der Nutzer eine Verbindung zu dem Speicher aufbauen kann. Nach einem erfolgten Verbindungsaufbau kann dem Nutzer schließlich von dem Speicher eine Liste zur Verfügung gestellt bekommen, aus der der Nutzer seine Reinigungsmaschine anhand einer die Reinigungsmaschine eindeutig definierenden gerätespezifischen Information auszuwählen kann. Alternativ zum Empfang einer Zieladresse des Speichers kann der Nutzer von dem Dosiergerät über ein Nutzerendgerät auch direkt mit dem Speicher verbunden werden.

Eine Dosierung von Reinigungsmittel erfolgt gemäß dem gegenständlichen Verfahren nicht nur abhängig von den empfangenen Steuerinformationen, sondern auch anhand von dem ermittelten Fortschritt des Reinigungsvorgangs.

Die Ermittlung des Fortschritts des Reinigungsvorgangs erfolgt hierbei vorzugsweise über die Erfassung von Messwerten durch Sensoren, die insbesondere in einer Sensoreinheit zusammengefasst und an dem Dosiergerät angeordnet sind. Bei den in die Sensoreinheit des Dosiergeräts integrierten Sensoren kann es sich um verschiedenste Arten von Sensoren handeln die vorzugsweise verschiedene Messgrößen erfassen können, so dass ein aktueller Reinigungszustand von Reinigungsgut möglichst exakt bestimmt werden kann.

So können beispielsweise Sensoren zur Erfassung von Messgrößen einer Reinigungslauge sowie Sensoren zur Messung geometrischer, mechanischer, dynamischer, thermischer oder kalorischer Messgrößen oder auch Sensoren zur Messung von klimatischen, optischen, akustischen, elektrischen chemischen, biologischen oder medizinischen Messgrößen angeordnet sein.

In einer typischen Umsetzung zur Verarbeitung der von der Sensoreinheit erfassten Messwerte können die Sensorinformationen gesammelt und für die weitere Verwendung aufbereitet werden, wobei das Dosiergerät dann vorzugsweise über einen nicht-temporären Speicher verfügt, um die über die Zeit aufgenommenen Sensorinformationen abzulegen und eine Entscheidungsfindung über den geeigneten Zeitpunkt und die Zugabe geeigneter unterschiedlicher Substanzen selbsttätig durchzuführen sowie bei Fehlen entsprechender Entscheidungskriterien oder externer weiterführender Einflüsse auf die Entscheidungsfindung einen vorab definierten Ablauf der Zugabe von Substanzen umzusetzen und eine auf die Gegebenheiten optimierte Reinigung oder Behandlung durchzuführen.

Eine Aufbereitung der Sensorinformationen kann gegenständlich auch dazu verwendet werden, die einen Reinigungsvorgang durchführende Reinigungsmaschine automatisch zu identifizieren, indem das bewegliche Dosiergerät vorzugsweise über eine drahtlose Verbindung über ein Nutzerendgerät indirekt oder über ein integriertes Modem direkt mit einer Datenbank, einer Internetseite oder einem Dienst in einer Cloud verbunden ist und über einen Datenabgleich zwischen den von dem beweglichen Dosiergerät aufbereiteten Daten und den in der Cloud gespeicherten Daten eine Identifikation der den Reinigungsvorgang ausführenden Reinigungsmaschine durchführt, so dass eine auf die Gegebenheiten optimierte Reinigung durchführbar ist.

Neben der Identifikation der den Reinigungsvorgang ausführenden Reinigungsmaschine anhand einer Aufbereitung der Sensorinformationen, kann über einen ständigen Abgleich der aufbereiteten Sensorinformationen mit den von einer Datenbank, einer Internetseite oder einem Dienst in der Cloud zur Verfügung gestellten Informationen auch ein iterativer auf den individuellen Waschgang bezogener Prozess zur Anpassung und zur Entscheidungsfindung eines geeigneten Dosierzeitpunkts durchgeführt werden.

Gemäß einer weiteren Ausführungsform des gegenständlichen Verfahrens kann eine Entscheidungsfindung eines geeigneten Dosierzeitpunkts auch über die Einbeziehung von Nutzererfahrungswerten erfolgen, indem der Nutzer vorzugsweise über ein Nutzerendgerät eine manuelle Parametrisierung eines Reinigungsvorgangs vornehmen kann.

Gemäß einer weiteren Ausführungsform zur Verbesserung des gegenständlichen Verfahrens wird vorgeschlagen, dass anhand der während eines Reinigungsvorgangs erfassten Messgrößen und der empfangenen Steuerinformationen ein Nutzerprofil erstellt wird, das vorzugsweise auf einem an dem Dosiergerät angeordneten nicht flüchtigen Speicher gespeichert wird.

Gemäß einer weiteren Ausführungsform des gegenständlichen Verfahrens wird vorgeschlagen, dass das Dosiergeräts über einen vollständig autonomen, selbstlernenden Algorithmus verfügt, welcher über die Zeit sowohl die von dem Dosiergerät aufbereiteten, auf den individuellen Waschvorgang bezogenen Informationen, als auch die zusätzlich von einem Speicher zugänglichen oder in einem Nutzerprofil gespeicherten Informationen verwendet, um eine Entscheidungsfindung über den geeigneten Zeitpunkt und die Zugabe geeigneter unterschiedlicher Reinigungssubstanzen zu erlernen, um eine auf die Gegebenheiten energietechnisch, reinigungstechnisch, lärmtechnisch oder beliebig andersartig optimierte Reinigung durchzuführen.

Gemäß einem zweiten Aspekt der Erfindung wird ein mobiles Dosiergerät zur automatischen Dosierung von Reinigungsmitteln in einer Reinigungsmaschine vorgeschlagen, umfassend:
zumindest eine Dosierkammer; zumindest eine Sensoreinheit, eingerichtet zur Erfassung von Messgrößen; zumindest eine Steuereinheit, eingerichtet zur Steuerung des mobilen Dosiergeräts; zumindest eine Kommunikationseinheit, eingerichtet zum Empfangen von Steuerinformationen,
wobei die Steuerinformationen abhängig von einer über eine Nutzerschnittstelle manuell eingebbaren Information zu der Reinigungsmaschine sind; wobei die Information zu der Reinigungsmaschine eine gerätespezifische Information ist, vorzugsweise eine die Reinigungsmaschine eindeutig definierende Information, ausgewählt aus einer Seriennummer, einer Produktnummer, einer Typnummer, einer Modellnummer, einer Servicenummer, einer Gestellnummer, einer Marke, einer Baureihe, einem Bautyp der Reinigungsmaschine; und wobei das Dosiergerät derart eingerichtet ist, dass eine dosierte Zuführung von Reinigungsmittel in Abhängigkeit von den empfangenen Steuerinformationen und dem ermittelten Fortschritt des Reinigungsvorgangs erfolgt.

Die Sensoreinheit des mobilen Dosiergeräts umfasst vorzugsweise eine Reihe von verschiedenen Sensoren, die in der Lage sind, insbesondere einen aktuellen Reinigungszustand von

Reinigungsgut während eines Reinigungsvorgangs besonders exakt bestimmen zu können, so dass unter anderem auf dieser Grundlage eine optimale Dosierung von Reinigungsmittel vorgenommen werden kann.

Dazu sollte die Sensoreinheit vorzugsweise zumindest einen Sensor zur Erfassung des Zustands einer Reinigungslauge, insbesondere zumindest einen Sensor zur Messung der Viskosität, der Trübung, der Pollenbelastung, der Wasserhärte, der Farbausspülung, des pH-Werts, oder des Geruchs aufweisen.

Zusätzlich wird zur Gewährleistung der Bestimmung einer optimalen Dosierung von Reinigungsmittel vorgeschlagen, dass zumindest ein Sensor zur Messung einer der folgenden Messgrößen an dem Dosiergerät und/oder der Reinigungsmaschine angeordnet ist: geometrische Messgrößen; mechanische Messgrößen; dynamische Messgrößen; thermische und kalorische Messgrößen; klimatische Messgrößen; optische Messgrößen; akustische Messgrößen; elektrische Messgrößen; chemische, biologische oder medizinische Messgrößen.

Zusätzlich kann es für eine möglichst exakte Bestimmung eines Verschmutzungszustands von Reinigungsgut vorteilhaft sein, wenn die Sensoreinheit zumindest eine Mini- oder Mikrokamera zur Erfassung eines Zustands eines Reinigungsguts aufweist.

Die Steuereinheit des gegenständlichen Dosiergeräts ist vorzugsweise dazu eingerichtet die Dosierung des Dosiergerätes anhand der von der Sensoreinheit ermittelten Messwerte sowie anhand der erhaltenen Steuerinformation zu steuern. Zusätzlich ist die Steuereinheit auch in der Lage die Dosierung von Reinigungsmittel von anderen Informationen, wie von Nutzererfahrungswerten und Nutzerprofilen und dergleichen abhängig zu machen, wobei die Steuereinheit eine Dosierung von Reinigungsmittel insbesondere nach einer erfolgten Kommunikation mit der Kommunikationseinheit vornimmt.

Gemäß einer bevorzugten Ausführung ist die Kommunikationseinheit des gegenständlichen Dosiergeräts als eine Drahtloskommunikationseinheit gebildet, eingerichtet zur drahtlosen Kommunikation, insbesondere über WLAN, Bluetooth, Zigbee, NFC, Wibree, WiMAX, Measurable Networks, IrDA oder optischen Richtfunk. Vorteilhafterweise kann das mobile Dosiergerät somit trotz seiner Anordnung innerhalb einer Reinigungsmaschine mit einem Nutzer, einem Speicher, einem Cloud-basierten Dienst und dergleichen in Kontakt stehen.

Neben der Möglichkeit einer drahtlosen Kommunikation des Dosiergeräts mit einem Nutzer, einem Speicher, einem Cloud-basierten Dienst und dergleichen bietet die Drahtloskommunikationseinheit auch die Möglichkeit einer drahtlosen Kommunikation des Dosiergeräts mit anderen Reinigungsmaschinen innerhalb eines privaten oder öffentlichen Netzwerks.

Für eine optimale Dosierung wird gegenständlich vorgeschlagen, dass das mobile Dosiergerät vorzugsweise mehrere Dosierkammern aufweist, die insbesondere als bauliche Einheit gebildet sind. Die Dosierkammern können vor einem Reinigungsvorgang vorzugsweise über separate Nachfüllöffnungen mit dem gewünschten Reinigungsmittel befüllt werden. Die Nachfüllöffnungen sind vorzugsweise so groß, dass über diese sowohl einfach befüllt werden kann, als auch ein eventueller Spülvorgang vorgenommen werden kann. Dadurch, dass das Dosiergerät einfach gesäubert werden kann, kann ein und dieselbe Dosierkammer nach Spülung mit verschiedenen Reinigungsmitteln befüllt werden. Dies erlaubt insbesondere einen Einsatz eines das Dosiergeräts in verschiedenen Reinigungsmaschinen.

Um eine optimale Dosierung zu gewährleisten, wird zudem vorgeschlagen, dass das mobile Dosiergerät, insbesondere die Zuführeinheit des Dosiergeräts zumindest ein elektrisches Ventil sowie die dazugehörige Steuerelektronik aufweist. Vorzugsweise weist das mobile Dosiergerät ein Dosierventil für jede Dosierkammer auf. Hierbei handelt es sich insbesondere um elektrisch gesteuerte Ventile. Alternativ können die Ventile auch pneumatisch oder magnetisch gesteuert sein.

Zur notwendigen Energieversorgung wird ferner vorgeschlagen, dass das mobile Dosiergerät ein autarkes Energieumwandlungssystem aufweist. Alternativ kann auch ein anderes Energieumwandlungssystem an mobilen Dosiergerät angeordnet sein, das beispielsweise Bewegungsenergie oder Wärmeenergie in elektrische Energie umwandelt. Zudem wird vorgeschlagen, dass alternativ oder kumulativ zu einem autarken Energieumwandlungssystem eine mobile Energieversorgungseinheit an dem mobilen Dosiergerät angeordnet ist, insbesondere in Form von Batterien oder Akkumulatoren, so dass die Versorgung des mobilen Dosiergeräts mit elektrischer Energie jederzeit gewährleistet ist.

Alternativ kann das mobile Dosiergerät auch eine Einrichtung zur induktiven und berührungslosen Übertragung elektrischer Energie aufweisen, so dass das mobile Dosiergerät berührungslos per Induktion elektrisch gespeist werden kann. Daher wird vorgeschlagen, dass das mobile Dosiergerät zumindest eine Spule aufweist, in der über ein magnetisches und/oder elektrisches Feld ein Strom induziert werden kann.

Um die jeweiligen Füllstände der Reinigungsmittel in vorzugsweise jeder Dosierkammer bestimmen zu können, wird darüber hinaus vorgeschlagen, dass das mobile Dosiergerät vorzugsweise in jeder Dosierkammer eine Messeinrichtung zur Messung eines Füllstands, insbesondere eines absoluten Füllstands aufweist. Um einen fortwährenden Überblick über die Füllstände der Reinigungsmittel zu erlangen kann die Messung des Füllstands vorzugsweise kontinuierlich erfolgen, insbesondere über eine mechanische, eine kapazitive oder eine optische Messmethode. Alternativ kann eine Füllstandsmessung auch über ein Leitfähigkeits, Ultraschall- oder ein Mikrowellenverfahren erfolgen.

In einer energiesparenden Alternative zur kontinuierlichen Messung der Füllstände kann der Füllstand der Dosierkammern auch nur in bestimmten Intervallen oder erst ab bestimmten Grenzen mittels Füllstandsgrenzschaltern bestimmt werden.

Um die gemessenen Füllstände der Reinigungsmittel anzeigen zu können bzw. um ggf. warnen zu können, wenn niedrige Füllstände erreicht werden, wird vorgeschlagen, dass das mobile Dosiergerät dazu geeignet ist, eine Benachrichtigung über aktuelle Füllstände zu versenden.

Neben aktuellen Füllständen kann das mobile Dosiergerät vorzugsweise auch Informationen über etwaige Fehler in einer Spül - oder Waschkammer, wie Verkokungen von Kontakten, Verklemmen von Ventilen oder Entladungen von Batterien, weitergeben.

Gemäß einer weiteren Ausführung wird ferner ein Computerprogramm beschrieben, das Programmanweisungen umfasst, die einen Prozessor zur Ausführung und/oder Steuerung eines gegenständlichen Verfahrens veranlassen, wenn das Computerprogramm auf dem Prozessor läuft.

Zudem wird ein beispielhaftes computerlesbares Speichermedium beschrieben, welches ein beispielhaftes Computerprogramm enthält.

Es wird gemäß einem dritten Aspekt ferner ein beispielhaftes System beschrieben, umfassend das mobile Dosiergerät, ein Nutzerendgerät sowie einen Speicher, welche zusammen dazu eingerichtet sind, ein beispielhaftes gegenständliches Verfahren durchzuführen.

Die zuvor in dieser Beschreibung beschriebenen beispielhaften Ausgestaltungen der vorliegenden Erfindung sollen auch in allen Kombinationen miteinander offenbart verstanden werden. Insbesondere sollen beispielhafte Ausgestaltungen in Bezug auf die unterschiedlichen Aspekte offenbart verstanden werden.

Insbesondere sollen durch die vorherige oder folgende Beschreibung von Verfahrensschritten gemäß bevorzugter Ausführungsformen eines Verfahrens auch entsprechende Mittel zur Durchführung der Verfahrensschritte durch bevorzugte Ausführungsformen einer Vorrichtung offenbart sein. Ebenfalls soll durch die Offenbarung von Mitteln einer Vorrichtung zur Durchführung eines Verfahrensschrittes auch der entsprechende Verfahrensschritt offenbart sein.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren, zu entnehmen. Die Figuren sollen jedoch nur dem Zwecke der Verdeutlichung, nicht aber zur Bestimmung des Schutzbereiches der Erfindung dienen. Die Figuren sind nicht maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

### Kurze Beschreibung der Figuren

In der Zeichnung zeigt
- Fig. 1: ein mobiles Dosiergerät zur automatischen Dosierung von Reinigungsmitteln gemäß einem ersten Ausführungsbeispiel, angeordnet in dem Behandlungsraum eines Geschirrspülers;
- Fig. 2: das mobile Dosiergerät aus Fig. 1 in einer vergrößerten Ansicht;
- Fig. 3: ein mobiles Dosiergerät zur automatischen Dosierung von Reinigungsmitteln gemäß einem zweiten Ausführungsbeispiel in einer vergrößerten Ansicht;
- Fig. 4: das mobile Dosiergerät aus Fig. 3, angeordnet in der Einspülkammer einer Waschmaschine, verbunden mit einem Nutzerendgerät;
- Fig. 5: ein Ablaufdiagramm zur Veranschaulichung eines beispielhaften Vorgangs zum Empfang von Steuerinformationen;
- Fig. 6a: ein Beispiel einer ersten Ebene einer Auswahltabelle zur Auswahl eines Maschinentyps einer Reinigungsmaschine gemäß einem ersten Ausführungsbeispiel;
- Fig. 6b: die Tabelle aus Fig. 6a in einer zweiten Ebene;
- Fig. 7a: ein Beispiel einer Auswahltabelle zur Auswahl eines Maschinentyps einer Reinigungsmaschine gemäß einem zweiten Ausführungsbeispiel;
- Fig. 7b: die Tabelle aus Fig. 7a in einer zweiten Ebene;
- Fig. 8: Auftragung der Innentemperatur eines Geschirrspülers gegen die Zeit zur Veranschaulichung eines adaptiven Prozesses in einem Geschirrspüler.

Detaillierte Beschreibung einiger beispielhafter Ausführungsformen der Erfindung

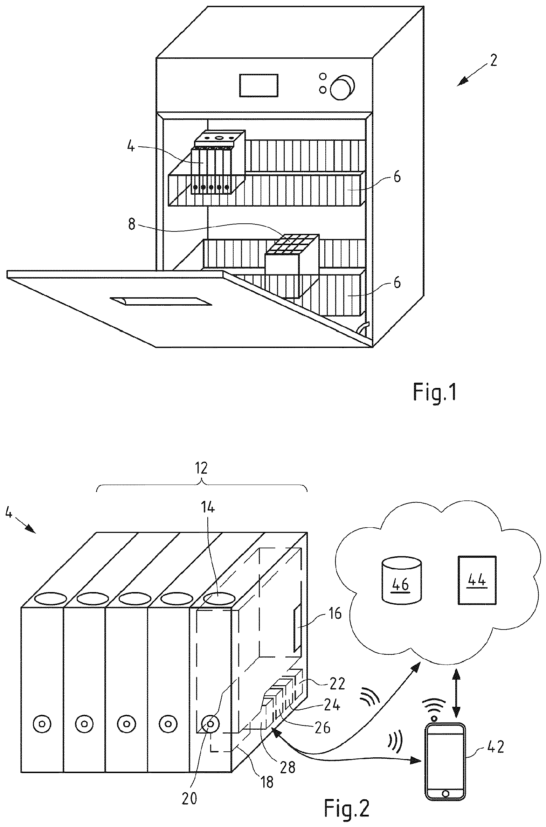

Fig. 1 zeigt ein mobiles Dosiergerät 4 zur automatischen Dosierung von Reinigungsmitteln gemäß einem ersten Ausführungsbeispiel, angeordnet in dem Behandlungsraum eines Geschirrspülers 2.

Bei einer Anordnung des Dosiergeräts 4 innerhalb eines Geschirrspülers 2 sollte das Gerät vorzugsweise robust gegenüber den während der jeweiligen Reinigungsvorgänge einwirkenden mechanischen und chemischen Einflüssen ausgeführt sein.

Das gemäß Fig. 1 in einem der Körbe 6 des Geschirrspülers 2 angeordnete Dosiergerät 4 verfügt vorzugsweise über eine eingebaute autarke Stromversorgung 24 und kann alternativ auch in dem Besteckkorb 8 oder in einer anderen Ausführung auch in einer Besteckschublade bzw. in oder an einem Vorratsbehälter für Reinigungsmittel des Geschirrspülers 2 angeordnet sein.

Fig. 2 zeigt das mobile Dosiergerät aus Fig. 1 in einer vergrößerten Ansicht, bei dem die verschiedenen Dosierkammern 12 in einer baulichen Einheit gebildet sind. Die Dosierkammern 12 weisen eigene Nachfüllöffnungen 14 sowie jeweils einen eigenen Füllstandssensor 16 auf. Das Innere einer jeden Dosierkammer 12 ist jeweils über eine Steuerleitung 18 mit einem elektrischen Ventil 20 verbunden.

Es versteht sich, dass die Dosierkammern 12 auch mit der entsprechenden - hier nicht explizit dargestellten - Steuerelektronik ausgestattet sein müssen, um eine entsprechende Dosierung der Reinigungsmittel gewährleisten zu können.

Ferner ist das Dosiergerät 4 mit einer Kommunikationseinheit 28 umfassend eine Kommunikationsschnittstelle ausgestattet, um die notwendige Kommunikation mit übrigen Komponenten des Dosiergeräts 4, wie beispielsweise der Steuereinheit 22, insbesondere betreffend die Füllstände der Reinigungsmittel sowie den Empfang der Dosierungsanweisungen führen zu können.

Neben der Möglichkeit einer Kommunikation mit den internen Komponenten des Dosiergeräts 4, ist das Dosiergerät 4 über eine vorzugsweise als Drahtloskommunikationsschnittstelle gebildete Schnittstelle der Kommunikationseinheit 28 auch zur Kommunikation mit einem Nutzer 48 befähigt. Ein Nutzer 48 kann mit dem Dosiergerät 4 beispielsweise mittels eines Nutzerendgeräts 42 vorzugsweise mittels eines Computers, Tablets oder Smart Phones kommunizieren. Eine Verbindung kann dabei beispielsweise per Bluetooth, WLAN, oder auch per Mobilfunk hergestellt werden.

Neben einer Kommunikation mit einem Nutzer 48, erlaubt die vorzugsweise als Drahtlosschnittstelle gebildete Kommunikationsschnittstelle auch eine Kommunikation des Dosiergeräts 4 mit einem extern angeordneten Speicher 46, der vorzugsweise über eine Verbindung mit einer Cloud erreichbar ist. Dabei kann eine Kommunikation mit dem extern angeordneten Speicher 46 entweder direkt oder indirekt über ein Nutzerendgerät 42 erfolgen.

Neben einer indirekten Verbindung mit der Cloud über ein Nutzerendgerät 42 kann eine Verbindung zu der Cloud auch indirekt über einen Internetdienst 44 erfolgen.

Alternativ oder in Kombination zur Speicherung von Daten auf einem externen Speicher 46 kann auch ein interner Speicher in dem Dosiergerät 4 vorhanden sein, auf dem eine Datenspeicherung erfolgen kann.

Das Dosiergerät 4 verfügt neben einer Kommunikationseinheit 28 und einer Steuereinheit 22 ferner über einer Sensoreinheit 24 zur Erfassung von Messgrößen sowie über eine autonome Stromversorgung 26 in Form von austauschbaren Batterien oder in Form eines autarken Energieumwandlungssystems.

Alternativ kann das Dosiergerät 4 auch über die Stromversorgung des Geschirrspülers 2 mit Strom versorgt werden.

Das Dosiergerät 4 gemäß Fig. 2 weist insgesamt fünf Dosierkammern 12 auf, es versteht sich jedoch von selbst, dass ebenso auch mehr oder weniger Dosierkammern 12 angeordnet sein können, die ebenso auch nicht in baulicher Einheit gebildet sein müssen.

Das dargestellte Dosiergerät 4 eignet sich neben der Dosierung von Spülmittel ebenso für eine optimierte Einbringung unterschiedlicher Substanzen, wie z.B. Klarspüler, Wasserenthärter, Spülmaschinensalz in vorzugsweise flüssiger Form oder Spülmaschinenreiniger und dergleichen. Die einzelnen Substanzen werden dann vorzugsweise in die unterschiedlichen Dosierkammern 12 des Dosiergeräts 4 eingefüllt. Durch die elektrischen Ventile 20 wird dann bei Bedarf die jeweilige Substanz in der jeweils von der Steuereinheit 22 bestimmten Menge in den Behandlungsraum eingebracht.

Jede Dosierkammer 12 verfügt über Füllstandsensoren 16, welche den Zustand und die verfügbare Menge der jeweiligen Substanz messen und an die Steuereinheit 22 weiterleiten, die bei Bedarf einen Hinweis an den Nutzer 48 zum Nachfüllen oder Nachbestellen gibt.

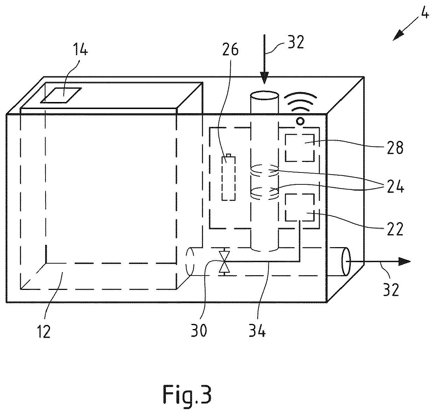

Fig. 3 zeigt ein mobiles Dosiergerät 4 zur automatischen Dosierung von Reinigungsmitteln zur Platzierung in der Einspülkammer 36 einer Waschmaschine 2' in einer vergrößerten Ansicht.

Das Dosiergerät 4 weist eine Reinigungsmittelkammer 12 sowie eine Nachfüllöffnung 14 zur Befüllung der Reinigungsmittelkammer 12 mit Reinigungsmittel auf. Über das elektrische Ventil 30 ist das Dosiergerät 4 mit der Wasserleitung 32 verbunden, so dass die Zugabe von Reinigungsmittel über das Ventil 30 elektronisch gesteuert erfolgen kann. Die Steuerung erfolgt in diesem Fall über die Steuereinheit 22, die über eine Steuerleitung 34 mit dem elektrischen Ventil 30 verbunden ist.

Das innerhalb eines Waschzyklusses von oben in die Wasserleitung 32 einströmende Wasser der Waschmaschine 2' kann durch beispielsweise in der Wasserleitung 32 angeordnete Sensoren 24, wie beispielsweise Viskositäts- und Trübungssensoren analysiert werden, wodurch auf einen aktuellen Verschmutzungszustand des in der Waschtrommel platzierten Reinigungsguts geschlossen werden kann.

Das mobile Dosiergerät 4 verfügt darüber hinaus über eine autonome Stromversorgung 26 in Form von Batterien oder Akkumulatoren sowie über eine Kommunikationseinheit 28, eingerichtet zur drahtlosen Kommunikation per Bluetooth oder WLAN mit etwaigen weiteren Sensoren, einem Nutzer 48 über ein Nutzerendgerät 42 und mit einem vorzugsweise externen Speicher 46.

Es versteht sich, dass die Ausführung eines mobilen Dosiergeräts 4 je nach Typ der Reinigungsmaschine in Dimension und Form unterschiedlich ausfallen kann. Beispielsweise kann das Dosiergerät 4 auch aus mehreren Kammern 12 gebildet sein, die über einzelne Nachfüllöffnungen 14 verfügen und über einzelne Zuführeinrichtungen und elektrische Ventile 30 mit der Wasserleitung 32 verbunden sind. Die einzelnen Ventile 30 sind in diesem Fall vorteilhafterweise über einzelne Steuerleitungen 34 mit der Steuereinheit 28 verbunden, so dass eine separate Dosierung unterschiedlicher Reinigungsmittel in Abhängigkeit des ermittelten Verschmutzungszustands des Reinigungsguts, von dem mobilen Dosiergerät 4 gesteuert, erfolgen kann.

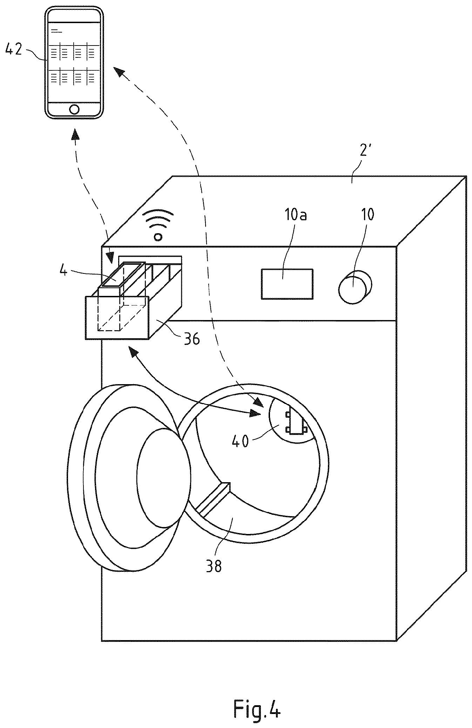

Fig. 4 zeigt das mobile Dosiergerät 4 aus Fig. 3, angeordnet in der Einspülkammer 36 einer Waschmaschine 2' und mit einem Nutzerendgerät 42 verbunden.

Zusätzlich zu den in dem Dosiergerät 4 angeordneten Sensoren 24 sind noch weitere Sensoren 40 zur Erfassung von Messdaten mit dem Ziel der Bestimmung eines Betriebszustands der Waschmaschine 2' an der Rückseite der Trommel 28 angeordnet.

Um den Betriebszustand einer Reinigungsmaschine - wie der hier dargestellten - Waschmaschine 2' auch bei Verwendung eines möglichst universell einsetzbaren Dosiergeräts 4 möglichst genau bestimmen zu können, ist erkannt worden, dass es vorteilhaft ist, zusätzlich zu den von Sensoren 24, 40 erfassten Messwerten auch Steuerinformationen, insbesondere betreffend die Programmstruktur der jeweiligen Reinigungsmaschine zu kennen. Die Steuerinformationen können beispielsweise von einem Nutzer 48 selbst, wie gemäß dem in Fig. 4 dargestellten Ausführungsbeispiel über ein Smart Phone zur Verfügung gestellt werden, um die für einen Reinigungsvorgang optimalen Dosierzeitpunkte möglichst exakt bestimmen zu können, so dass ein bestmögliches Reinigungsergebnis erzielt werden kann.

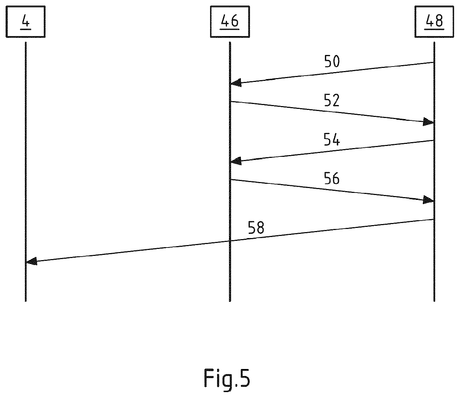

Fig. 5 zeigt ein Ablaufdiagramm zur Veranschaulichung eines beispielhaften Vorgangs zum Empfang von Steuerinformationen, bei dem ein Nutzer 48 zunächst über eine Nutzerschnittstelle mit Hilfe eines Nutzerendgeräts 42, beispielsweise mit Hilfe seines Smart Phones oder Tablets, über eine entsprechende Applikation eine Anfrage 50 zur Bereitstellung einer auf dem Speicher 46 hinterlegten Datentabelle an den Speicher 46 versendet.

Nach einer optionalen Authentifizierung des Nutzers 48, die vorzugsweise in die Anfrage 50 integriert ist, stellt der Speicher 46 dem Nutzer 48 die gewünschten Daten in Schritt 52 über die Nutzerschnittstelle zur Verfügung. Diese Informationen werden dem Nutzer 48 vorzugsweise in Tabellenform zur Verfügung gestellt, insbesondere in Form einer verschiedenste Typen von Reinigungsmaschinen umfassenden Tabelle, aus denen der Nutzer 48 seine Reinigungsmaschine auswählen kann.

Nach der entsprechenden Auswahl überträgt der Nutzer 48 seine Wahl in Schritt 54 über die Nutzerschnittstelle an den Speicher 46.

Anhand der von dem Nutzer 48 ausgewählten Reinigungsmaschine wählt der Speicher 46 in Schritt 56 die für die Reinigungsmaschine passenden Steuerinformationen aus und überträgt diese in Schritt 56 an den Nutzer 48. Auf dem Speicher 46 müssen dafür nicht notwendigerweise für jeden Reinigungsmaschinentypen eigene Steuerinformationen hinterlegt sein, es können auch für verschiedene Typen von Reinigungsmaschinen dieselben Steuerinformationen hinterlegt sein. Auch kann es sein, dass universelle Steuerinformationen auf dem Speicher 46 hinterlegt sind, die übertragen werden, wenn ein entsprechender Typ einer Reinigungsmaschine nicht gefunden werden kann.

In Schritt 58 werden die Steuerinformationen schließlich von dem Nutzer 48 über ein Nutzerendgerät 42 an das Dosiergerät 4 gesendet, welches die Steuerinformationen nutzt, um die einzelnen Betriebszustände eines Reinigungsvorgangs einer Reinigungsmaschine besser bestimmen zu können, um so schließlich eine exaktere Dosierung des Reinigungsmittels und damit ein bestmögliches Reinigungsergebnis zu erzielen.

Alternativ zu den letzten beiden Schritten 56 und 58, in denen die für die Reinigungsmaschine passenden Steuerinformationen zunächst von dem Speicher 46 an den Nutzer 48 übertragen werden (56), bevor der Nutzer 48 die Informationen an das Dosiergerät 4 weiterleitet (58), können die passenden Steuerinformationen auch von dem Speicher 46 direkt an das Dosiergerät 4 übertragen werden.

Alternativ zu der Kontaktaufnahme des Nutzers 48 mit dem Speicher 46 über eine Applikation eines Nutzerendgeräts 42 kann ein in der Nähe des Dosiergeräts 4 befindliches Nutzerendgerät 42 auch von dem Dosiergerät 4 erkannt werden, woraufhin der Nutzer 48 über das Nutzerendgerät 42 Informationen über die Adresse des Speichers 46 erhält oder direkt über das Dosiergerät 4 mit dem Speicher 46 verbunden wird.

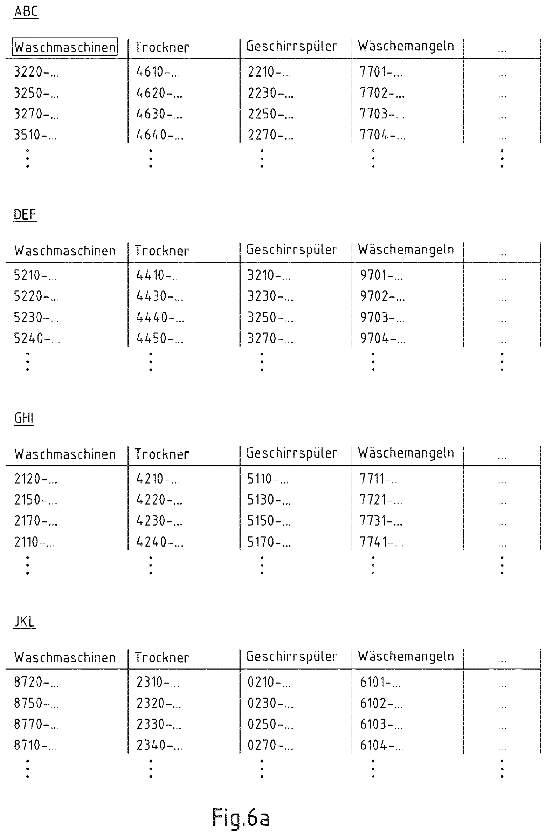

Fig. 6a zeigt ein Beispiel einer ersten Ebene einer Auswahltabelle zur Auswahl eines Maschinentypen einer Reinigungsmaschine gemäß einem ersten Ausführungsbeispiel, in dem verschiedene Typen von Reinigungsmaschinen nach Herstellern sortiert sind.

Die in Fig. 6a dargestellte Tabelle hat rein beispielhaften und keineswegs limitierenden Charakter und zeigt als mögliche auswählbare Reinigungsmaschinen Waschmaschinen, Trockner, Geschirrspüler und Wäschemangeln der Firmen ABC, DEF, GHI, JKL.

In einer Spalte finden sich anhand dieser Sortierkriterien nun die verschiedenen Typen der jeweiligen Reinigungsmaschine des entsprechenden Herstellers sortiert nach einer herstellerspezifischen Angabe, beispielsweise nach den ersten vier Ziffern der Seriennummern des jeweiligen Geräts.

Alternativ kann anstatt einer Sortierung anhand der Seriennummer eine Sortierung auch anhand anderer herstellerspezifischer Angaben, wie der Typennummer, der Modellnummer, der Produktnummer und dergleichen erfolgen. Beispielhaft sind in der keinesfalls als abschließende Aufzählung zu verstehenden ersten Tabelle des Herstellers ABC die ersten vier Ziffern der Seriennummern von vier Reinigungsmaschinen dargestellt.

Weil eine Auswahl der jeweiligen Reinigungsmaschine nur anhand der Seriennummer bei Weilen unkomfortabel und unübersichtlich ist, wird vorgeschlagen, dass der Nutzer 48 die Möglichkeit besitzt die aufgelisteten Daten in einer zweite Ebene anhand anderer Sortierkriterien einzusehen.

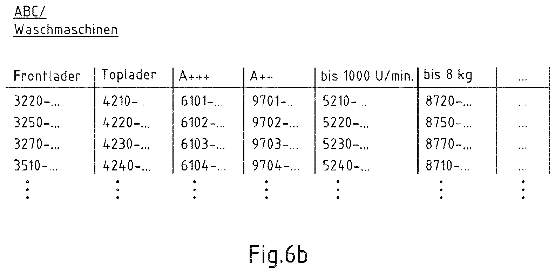

In dem gemäß Fig. 6a dargestellten Ausführungsbeispiel markiert der Nutzer 48 beispielswiese das Feld "Waschmaschinen" in der Tabelle 1 betreffend Reinigungsmaschinen der Firma ABC, da der Nutzer 48 diese Information sehr einfach, bereits bei einem ersten Blick auf die Reinigungsmaschine erkennen kann. Über die Auswahl des Feldes "Waschmaschinen" der Firma ABC gelangt der Nutzer 48 somit in die gemäß Figur 6b dargestellte beispielhafte zweite Ebene der Auswahltabelle.

Fig. 6b zeigt nun eine Tabelle mit Waschmaschinen der Firma ABC sortiert anhand verschiedenster gerätespezifischer Kennzeichen eindeutig gekennzeichnet anhand der ersten vier Ziffern der Seriennummer.

In der Tabelle aus Fig. 6b kann der Nutzer 48 sein jeweiliges Gerät beispielsweise anhand der gerätespezifischen Kennzeichen, ob es sich um eine als Frontlader bzw. als Toplader gebildete Waschmaschine handelt, anhand der Energieeffizienzklasse, anhand der maximal erzielbaren Umdrehungszahl der Waschtrommel, anhand der Befüllmenge oder dergleichen auswählen. Dies ist insbesondere vorteilhaft, wenn der Nutzer 48 die Seriennummer des Gerätes nicht findet oder aufgrund der zahlreichen anderen Kennzeichen auf dem Typenschild nicht eindeutig identifizieren kann.

Vorteilhafterweise lässt sich die Seriennummer einer Reinigungsmaschine dabei durch weiteres Schneiden von unterschiedlichsten gerätespezifischen Angaben in mehreren Unterebenen ermitteln, obwohl der Nutzer 48 die Seriennummer des Gerätes gar nicht kennt. So können die Tabellen derart gestaltet sein, dass ein Nutzer 48 beispielsweise in der Lage ist, die Seriennummer einer Waschmaschine anhand der Angaben auszuwählen, ob die Waschmaschine als Frontlader bzw. als Toplader gebildet ist und welche Energieeffizienzklasse, welche maximal erzielbare Umdrehungszahl und welche Befüllmenge sie besitzt.

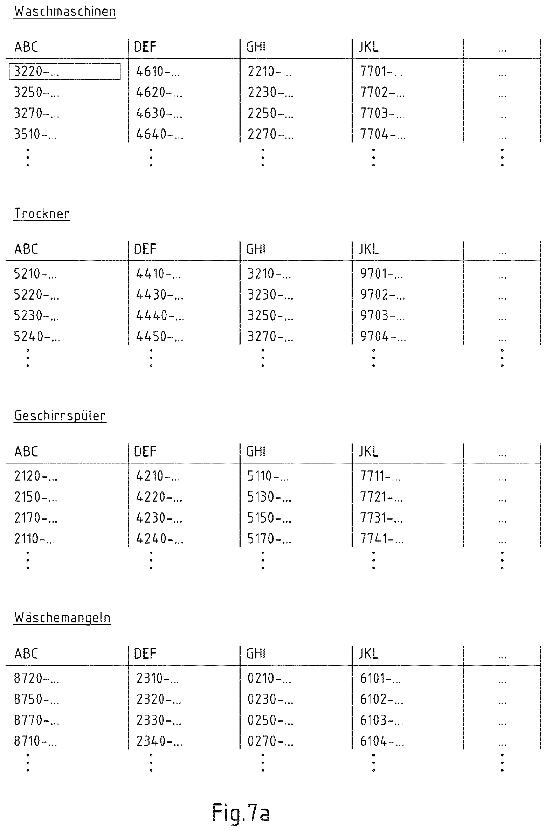

Fig. 7a zeigt ein Beispiel einer ersten Ebene einer Auswahltabelle zur Auswahl eines Maschinentypen einer Reinigungsmaschine gemäß einem zweiten Ausführungsbeispiel, in dem verschiedene Hersteller von Reinigungsmaschinen nach Art der Reinigungsmaschinen sortiert sind. Die in Fig. 7a dargestellte als rein beispielhaft zu verstehende Tabelle zeigt als mögliche auswählbare Hersteller der Reinigungsmaschinen Waschmaschinen, Trockner, Geschirrspüler und Wäschemangeln die Firmen ABC, DEF, GHI, JKL.

In einer Spalte finden sich anhand dieser Sortierkriterien nun entsprechend der in Fig. 6a dargestellten Tabelle die verschiedenen Typen der jeweiligen Reinigungsmaschine des entsprechenden Herstellers sortiert nach einer herstellerspezifischen Angabe, beispielsweise nach den ersten vier Ziffern der Seriennummern des jeweiligen Geräts, anhand derer eine Auswahl der jeweiligen Reinigungsmaschine erfolgt.

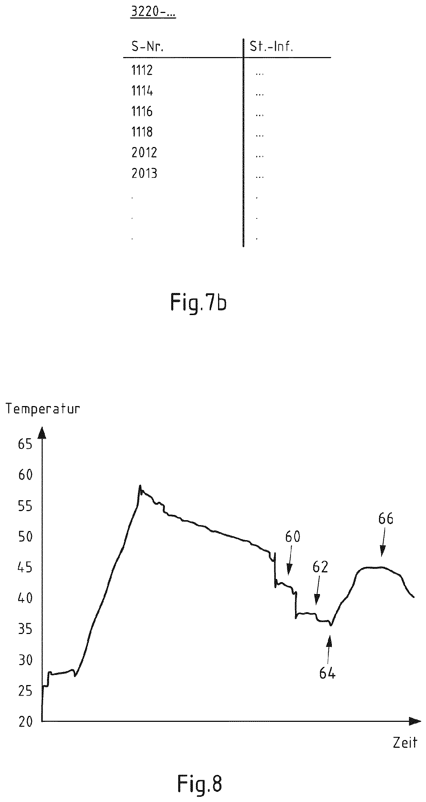

In dem gemäß Fig. 7a dargestellten Ausführungsbeispiel markiert der Nutzer 48 beispielsweise das Feld mit den ersten vier Ziffern der Seriennummer "3220-..." in der Tabelle 1 betreffend Waschmaschinen der Firma ABC. Über die Auswahl des Feldes der Seriennummer "3220-..." der Firma ABC gelangt der Nutzer 48 somit in die gemäß Figur 7b dargestellte beispielhafte zweite Ebene der Auswahltabelle.

Fig. 7b zeigt nun eine Tabelle mit Waschmaschinen der Firma ABC beginnend mit den Ziffern "3220-" sortiert anhand der vollständigen Seriennummer, in der der Nutzer 48 seine jeweilige Reinigungsmaschine eindeutig auswählen kann.

Wie der Tabelle aus Fig. 7b zu entnehmen ist, sind jeder Reinigungsmaschine eindeutige Steuerinformationen zugeordnet, die in der Tabelle aus Fig. 7b entsprechend direkt neben der jeweiligen vollständigen Seriennummer angeordnet werden und ausgewählt werden können. Es müssen hierbei nicht zwangsläufig jeder Seriennummer verschiedene Steuerinformation zugeordnet sein. In manchen Fällen ist es auch möglich, dass verschiedene vorzugsweise sehr ähnlich Reinigungsmaschinen dieselbe Steuerinformationen besitzen.

Fig. 8 zeigt schließlich eine Auftragung der Innentemperatur eines Geschirrspülers 2 gegen die Zeit zur Veranschaulichung eines adaptiven Prozesses in einem Geschirrspüler 2.

Moderne Geschirrspüler 2 verfügen heutzutage häufig über ein Trocknungssystem auf Basis einer zeolithischen Trocknungseinheit, bei dem die wasserdampfgesättigten Wrasen mittels eines Ventilators über ein Bett aus Zeolithmaterial gedrückt oder gesaugt werden und das Zeolith das in der Luft enthaltene Wasser in einem exothermen Prozess aufnimmt. Die durch den exothermen Prozess stark erwärmte Abluft der Trocknungseinheit wird zurück in den Behandlungsraum des Geschirrspülers 2 geführt, wo sie das Geschirr erwärmt und nun als trockene Luft, erneut Wasser aufnimmt, so dass ein Kreislaufprozess entsteht, der erst endet, wenn kein Wasser mehr im Behandlungsraum verdampft, also das Geschirr getrocknet ist. Aufgrund der Exothermie des Adsorptionsprozesses ist es nicht mehr nötig das Geschirr für die Trocknung im Klarspülgang aufzuheizen, wodurch das Erwärmen des Klarspülwassers entfällt und die Energiebilanz des Gerätes deutlich positiver ausfällt.

Dieser Prozess wird aber nur dann durchlaufen, wenn die Vorratskammer des Klarspülers im maschineneigenen Dosierer gefüllt ist. Ist das nicht der Fall, z.B. wenn der Nutzer 48 ein multifunktionelles Geschirrspülprodukt mit integriertem Klarspüler benutzt, wird im Klarspülgang zusätzlich das Klarspülwasser erwärmt und so zusätzlich Energie für die Trocknung in das System eingetragen.

Vorliegend wird nun vorgeschlagen, dass das mobile Dosiergerät 4 Informationen betreffend den zeitlichen Verlauf der Wasseranwesenheit und der Temperatur in einem Behandlungsraum eines Geschirrspülers 2 ermittelt, um daraus einen optimalen Dosierzeitpunkt zu bestimmen.

Das kommunikationsfähige, automatische Dosiergerät 4 ist nun entweder selbst in der Lage die Daten auszuwerten, oder es sendet die ermittelten Daten, im diesem Beispiel den Temperaturverlauf mit Informationen über die aktuelle Wasseranwesenheit, an eine entfernte Stelle z.B. eine Cloud-Anwendung, die in der Lage ist die Daten zu analysieren und so ggf. Besonderheiten oder Anomalien entdeckt.

So entdeckt der Algorithmus, der den Temperaturverlauf untersucht, dass nach dem Zwischenspülgang 60 ein Wasserwechsel (Wasserabwesenheit und Temperaturabfall) erfolgt und ein darauffolgender unbeheizter Klarspülgang 62 (keine positive Temperaturänderung über die Zeit) vorliegt.

Die Schlussfolgerung in Unkenntnis des Maschinentyps ist, dass es sich um eine Maschine mit Zeolith-Trocknung handeln muss, da im Klarspülgang keine Erwärmung eingetreten ist.

Nun kann eine Rückmeldung an das automatische Dosiergerät 4 erfolgen, dass es sich in einer Maschine mit Zeolith-Trocknung befindet, woraufhin ausgehend von der Datenanalyse der Programmablauf auf dem Dosiergerät 4 angepasst wird und keine Erwärmung während des Klarspülvorgangs erfolgt, so dass die Temperatur bis zum Ende des Klarspülgangs 64 sinkt, um darauf im Verlauf der Zeolithtrocknung 66 energiesparend erwärmt zu werden. Das Ergebnis ist eine deutlich verbesserte Klar-Trockenleistung.

Die Änderung des Programmablaufs kann nach einmaliger Analyse der Daten erfolgen oder nach Analyse multipler Läufe. Eine kontinuierliche Analyse der Temperaturdaten stellt sicher, dass die einmal getroffene Entscheidung noch gilt oder korrigiert werden muss.

Die in dieser Spezifikation beschriebenen Ausführungsbeispiele der vorliegenden Erfindung und die diesbezüglich jeweils angeführten optionalen Merkmale und Eigenschaften sollen auch in allen Kombinationen miteinander offenbart verstanden werden. Insbesondere soll auch die Beschreibung eines von einem Ausführungsbeispiel umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Verfahrensschritte in den einzelnen Ablaufdiagrammen ist nicht zwingend, alternative Abfolgen der Verfahrensschritte sind denkbar. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar.

In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Die Verwendung des unbestimmten Artikels schließt eine Mehrzahl nicht aus. Eine einzelne Vorrichtung kann die Funktionen mehrerer in den Patentansprüchen genannten Einheiten bzw. Vorrichtungen ausführen. In den Patentansprüchen angegebene Bezugszeichen sind nicht als Beschränkungen der eingesetzten Mittel und Schritte anzusehen.

## Patentansprüche

1. Verfahren zur Dosierung von Reinigungsmitteln mit einem mobilen Dosiergerät (4) in Reinigungsmaschinen umfassend die Schritte:
- Empfangen von Steuerinformationen, wobei die Steuerinformationen abhängig von einer Information zu einer Reinigungsmaschine sind;
- Ermitteln des Fortschritts eines Reinigungsvorgangs;
- Dosieren von Reinigungsmittel abhängig von den empfangenen Steuerinformationen und dem ermittelten Fortschritt des Reinigungsvorgangs;
- wobei die Information zu der Reinigungsmaschine über eine Nutzerschnittstelle manuell eingebbar ist,
und wobei die Information zu einer Reinigungsmaschine eine gerätespezifische Information ist, vorzugsweise eine die Reinigungsmaschine eindeutig definierende Information, ausgewählt aus einer Seriennummer, einer Produktnummer, einer Typnummer, einer Modellnummer, einer Servicenummer, einer Gestellnummer, einer Marke, einer Baureihe, einem Bautyp der Reinigungsmaschine.

2. Verfahren nach Anspruch 1,
**dadurch gekennzeichnet, dass**
die Steuerinformationen Informationen zur Programmstruktur zumindest einer Reinigungsmaschine umfassen.

3. Verfahren nach Anspruch 1 oder 2,
**dadurch gekennzeichnet, dass**
die Information zu der Reinigungsmaschine vorzugsweise aus einer Liste ausgewählt wird.

4. Verfahren nach einem der vorangehenden Ansprüche,
**dadurch gekennzeichnet, dass**
die Steuerinformationen auf einem Speicher (46), vorzugsweise auf einem entfernt von dem Dosiergerät (4) angeordneten externen Speicher /46) hinterlegt sind.

5. Verfahren nach einem der vorangehenden Ansprüche,
**dadurch gekennzeichnet, dass**
ein Nutzer (48) zur Ermittlung der Steuerinformationen zumindest eine Zieladresse des Speichers (46) erhält, vorzugsweise automatisch mit der Zieladresse des Speichers (46) verbunden wird.

6. Verfahren nach einem der vorangehenden Ansprüche,
**dadurch gekennzeichnet, dass**
die ermittelten Steuerinformationen direkt von dem Speicher (46) auf das Dosiergerät (4) übertragen werden.

7. Verfahren nach einem der vorangehenden Ansprüche,
**dadurch gekennzeichnet, dass**
nach Empfang der Steuerinformationen ein Abgleich von real ermittelten Daten mit für die entsprechenden Steuerinformationen auf dem Speicher (46) hinterlegten Daten erfolgt.

8. Verfahren nach einem der vorangehenden Ansprüche,
**dadurch gekennzeichnet, dass**
anhand während eines Reinigungsvorgangs erfassten Messgrößen und der empfangenen Steuerinformationen ein Nutzerprofil erstellt wird, das vorzugsweise auf einem an dem Dosiergerät (4) angeordneten nicht flüchtigen Speicher (46) gespeichert wird.

9. Verfahren nach einem der vorangehenden Ansprüche,
**dadurch gekennzeichnet, dass**
die während eines Reinigungsvorgangs erfassten Messgrößen und empfangenen Steuerinformationen mit Hilfe eines maschinellen Lernsystems analysiert und erweitert werden.

10. System, umfassend:
- Mobiles Dosiergerät (4) zur automatischen Dosierung von Reinigungsmitteln in einer Reinigungsmaschine umfassend:
- zumindest eine Dosierkammer (12);
- zumindest eine Sensoreinheit (24, 40), eingerichtet zur Erfassung von Messgrößen;
- zumindest eine Steuereinheit (22), eingerichtet zur Steuerung des mobilen Dosiergeräts;
- zumindest eine Kommunikationseinheit (28), eingerichtet zum Empfangen von Steuerinformationen,
wobei die Steuerinformationen abhängig von einer über eine Nutzerschnittstelle manuell eingebbaren Information zu der Reinigungsmaschine sind,
wobei die Information zu der Reinigungsmaschine eine gerätespezifische Information ist, vorzugsweise eine die Reinigungsmaschine eindeutig definierende Information, ausgewählt aus einer Seriennummer, einer Produktnummer, einer Typnummer, einer Modellnummer, einer Servicenummer, einer Gestellnummer, einer Marke, einer Baureihe, einem Bautyp der Reinigungsmaschine; und
- wobei das Dosiergerät derart eingerichtet ist, dass eine dosierte Zuführung von Reinigungsmittel in Abhängigkeit von den empfangenen Steuerinformationen und dem ermittelten Fortschritt des Reinigungsvorgangs erfolgt;
- Nutzerendgerät (42);
- Speicher (46);
- eingerichtet zur Durchführung eines Verfahrens nach Anspruch 1.

## Claims

1. A method for dosing washing agents using a mobile dosing device (4) in washing machines, comprising the steps of:
- receiving control information, wherein the control information is dependent on information relating to a washing machine;
- determining the progress of a washing process;
- dosing washing agent depending on the received control information and the determined progress of the washing process;
- wherein the information relating to the washing machine can be manually entered via a user interface, and wherein the information relating to a washing machine is device-specific information, preferably information that clearly defines the washing machine, selected from a serial number, a product number, a type number, a model number, a service number, a rack number, a trademark, a series, a construction type of the washing machine.

2. The method according to claim 1,
**characterized in that**
the control information comprises information relating to the program structure of at least one washing machine.

3. The method according to either claim 1 or claim 2,
**characterized in that**
the information relating to the washing machine is preferably selected from a list.

4. The method according to any of the preceding claims,
**characterized in that**
the control information is stored on a memory (46), preferably on an external memory (46) remote from the dosing device (4).

5. The method according to any of the preceding claims,
**characterized in that**
a user (48) for determining the control information receives at least one target address of the memory (46), preferably is automatically connected to the target address of the memory (46).

6. The method according to any of the preceding claims,
**characterized in that**
the determined control information is transmitted directly from the memory (46) to the dosing device (4).

7. The method according to any of the preceding claims,
**characterized in that**
after receiving the control information, real-determined data are compared with data stored on the memory (46) for the corresponding control information.

8. The method according to any of the preceding claims,
**characterized in that**
a user profile which is preferably stored on a non-volatile memory (46) arranged on the dosing device (4) is created on the basis of measured variables detected during a washing process and on the basis of the received control information.

9. The method according to any of the preceding claims,
**characterized in that**
the measured variables detected during a washing process and received control information are analyzed and expanded using a machine learning system.

10. A system comprising:
- a mobile dosing device (4) for automatically dosing washing agents in a washing machine, comprising:
- at least one dosing chamber (12);
- at least one sensor unit (24, 40) configured to detect measured variables;
- at least one control unit (22) configured to control the mobile dosing device;
- at least one communication unit (28) configured to receive control information,
wherein the control information is dependent on information relating to the washing machine that can be manually input via a user interface,
wherein the information relating to the washing machine is device-specific information, preferably information which clearly defines the washing machine, selected from a serial number, a product number, a type number, a model number, a service number, a rack number, a trademark, a series, a construction type of the washing machine; and
- wherein the dosing device is configured such that a dosed supply of washing agent is provided on the basis of the received control information and the determined progress of the washing process;
- a user terminal (42);
- a memory (46);
- configured to carry out a method according to claim 1.

## Revendications

1. Procédé permettant le dosage d'agents de nettoyage avec un appareil de dosage (4) mobile dans des machines de nettoyage, comprenant les étapes consistant à :
- recevoir des informations de commande, dans lequel les informations de commande dépendent d'une information concernant une machine de nettoyage ;
- déterminer l'avancement d'un processus de nettoyage ;
- doser l'agent de nettoyage en fonction des informations de commande reçues et de l'avancement déterminé du processus de nettoyage ;
- dans lequel l'information concernant la machine de nettoyage peut être saisie manuellement par l'intermédiaire d'une interface utilisateur, et dans lequel l'information concernant une machine de nettoyage est une information spécifique à l'appareil, de préférence une information définissant clairement la machine de nettoyage, choisie parmi un numéro de série, un numéro de produit, un numéro de type, un numéro de modèle, un numéro de service, un numéro de châssis, une marque, une gamme de fabrication, un type de fabrication de la machine de nettoyage.

2. Procédé selon la revendication 1,
**caractérisé en ce que**
les informations de commande comprennent des informations concernant la structure de programme d'au moins une machine de nettoyage.

3. Procédé selon la revendication 1 ou 2,
**caractérisé en ce que**
l'information concernant la machine de nettoyage est de préférence choisie dans une liste.

4. Procédé selon l'une des revendications précédentes,
**caractérisé en ce que**
les informations de commande sont stockées sur une mémoire (46), de préférence sur une mémoire (46) externe disposée à distance de l'appareil de dosage (4).

5. Procédé selon l'une des revendications précédentes,
**caractérisé en ce que**
pour la détermination des informations de commande, un utilisateur (48) obtient au moins une adresse de destination de la mémoire (46), de préférence est automatiquement connecté à l'adresse de destination de la mémoire (46).

6. Procédé selon l'une des revendications précédentes,
**caractérisé en ce que**
les informations de commande déterminées sont transmises directement de la mémoire (46) à l'appareil de dosage (4).

7. Procédé selon l'une des revendications précédentes,
**caractérisé en ce que**
après la réception des informations de commande, une comparaison de données réelles déterminées avec des données stockées sur la mémoire (46) pour les informations de commande correspondantes est effectuée.

8. Procédé selon l'une des revendications précédentes,
**caractérisé en ce que**
à l'aide de grandeurs de mesure détectées pendant un processus de nettoyage et des informations de commande reçues, un profil d'utilisateur est établi, lequel est mémorisé de préférence sur une mémoire (46) non volatile disposée au niveau de l'appareil de dosage (4).

9. Procédé selon l'une des revendications précédentes,
**caractérisé en ce que**
les grandeurs de mesure détectées pendant un processus de nettoyage et les informations de commande reçues sont analysées et développées à l'aide d'un système d'apprentissage automatique.

10. Système, comprenant :
- un appareil de dosage (4) mobile permettant le dosage automatique d'agents de nettoyage dans une machine de nettoyage comprenant :
- au moins une chambre de dosage (12) ;
- au moins une unité formant capteur (24, 40), configurée pour la détection de grandeurs de mesure ;
- au moins une unité de commande (22), configurée pour la commande de l'appareil de dosage mobile ;
- au moins une unité de communication (28), configurée pour la réception d'informations de commande,
dans lequel les informations de commande dépendent d'une information concernant la machine de nettoyage pouvant être saisie manuellement par l'intermédiaire d'une interface utilisateur,
dans lequel l'information concernant la machine de nettoyage est une information spécifique à l'appareil, de préférence une information définissant clairement la machine de nettoyage, choisie parmi un numéro de série, un numéro de produit, un numéro de type, un numéro de modèle, un numéro de service, un numéro de châssis, une marque, une gamme de fabrication, un type de fabrication de la machine de nettoyage ; et
- dans lequel l'appareil de dosage est conçu de telle sorte qu'une amenée dosée d'agent de nettoyage est effectuée en fonction des informations de commande reçues et de l'avancement déterminé du processus de nettoyage ;
- un terminal utilisateur (42) ;
- une mémoire (46) ;
- configurés pour la mise en oeuvre d'un procédé selon la revendication 1.
